# FASCICULE DE BREVET EUROPEEN

(11) **EP 1 378 498 B1**
(45) Date de publication et mention de la délivrance du brevet: **08.08.2007**
(21) Numéro de dépôt: 03291521.7
(22) Date de dépôt: 20.06.2003
(51) Int. Cl.: C04B 41/91, B24C 1/04, B44C 1/22

(54) **Procédé de réalisation de reliefs en creux sur une pièce en porcelaine ou en faience**
Verfahren zur Herstellung von Reliefs auf Porzellan oder Steinzeug
Process for obtaining reliefs on porcelain or stoneware articles

(30) Priorité: 02.07.2002 FR 0208251
(43) Date de publication de la demande: 07.01.2004
(73) Titulaire: Compagnie des Arts de la Table, 75008 Paris (FR)
(72) Inventeur: Duval, Gilles, 23, Rue Boissy d'Anglas, 75008 Paris (FR)
(74) Mandataire: Geismar, Thierry

(56) Documents cités:
- DD-A- 229 859
- DE-A- 1 796 271
- US-A- 4 263 085

## Description

L'invention concerne un procédé de réalisation de reliefs en creux sur une pièce en porcelaine ou en faïence.

L'invention s'applique notamment, mais non exclusivement, à des pièces de service de table ou de décoration, telles qu'assiettes, soucoupes, plats, tasses, cendriers, etc.

Les pièces en porcelaine sont généralement décorées, une large gamme de pièces différentes pouvant ainsi être réalisée afin de satisfaire les attentes variées des clients.

On connaît du document DD-229 859 un procédé de réalisation de reliefs en creux sur une pièce dans lequel on prévoit un moyen auxiliaire de décoration sous la forme d'un masque en PVC comportant des ouvertures. Le moyen est disposé sur la pièce et on projette du sable sur le masque afin de former le décor.

On connaît du document DE-17 96 271 un procédé de réalisation de décors en relief sur une pièce en porcelaine dans lequel on dispose sur la pièce un masque dans lequel la forme du décor a été découpée puis on projette du sable en regard du masque jusqu'à atteindre la profondeur de décor désirée dans la pièce.

Enfin, le document US-4 263 085 décrit un procédé de réalisation de décors en creux sur une pièce dans lequel on découpe un masque dans un film plastique disposé sur un film de support. Un film de transfert est ensuite appliqué sur l'ensemble masque-film support et le masque est séparé du film support et adhère au film transfert. Le film transfert est appliqué sur la pièce puis retiré en laissant le masque solidaire de la pièce. Une projection de sable permet ensuite de former le décor dans la pièce.

Cependant, les procédés décrits ci-dessus mettent en oeuvre des masques dans lesquels on découpe les formes du décor voulues, ce qui nécessite des opérations et un outillage de découpe. De plus, les masques ainsi formés sont prévus pour être laissés à distance de la pièce à décorer ou pour être collés sur la pièce. Ceci nécessite donc soit le maintien à distance du masque à l'aide d'un dispositif particulier ou à la main, soit une étape de collage du masque.

Enfin, la réalisation de motifs complexes ou fins exige une grande précision dans la réalisation de la forme des motifs. Ce résultat est difficilement atteint, voir impossible à atteindre, lorsque le motif est réalisé par découpe, par exemple au moyen d'une presse comme c'est le cas dans le document US-4 263 085.

L'invention a pour but de fournir un procédé de décoration permettant d'obtenir de nouveaux types de décors qui ne peuvent être réalisés avec les procédés de l'art antérieur, de façon à offrir aux amateurs de porcelaine une nouvelle gamme de pièces, notamment avec des motifs complexes ou fins.

En particulier, l'invention vise un procédé de décoration permettant d'obtenir des reliefs en creux tranchés et relativement profonds.

Un autre objectif de l'invention est de fournir un procédé de décoration nécessitant moins d'opérations manuelles, et pouvant être au moins en partie industrialisé.

A cet effet, et selon un premier aspect, l'invention concerne un procédé de réalisation de reliefs en creux sur une pièce en porcelaine ou en faïence, dans lequel :
- on prévoit un masque comportant d'une part des parties pleines, aptes à résister à un jet de matière abrasive, et d'autre part des ouvertures , destinées à permettre le passage de la dite matière abrasive ;
- on place le masque devant la pièce ;
- on projette sur le masque, au moins en regard des ouvertures, une matière apte à entamer la porcelaine ou la faïence, de façon à obtenir un ou plusieurs creux de la forme et de la profondeur voulues ;
le procédé comprenant, en outre, les étapes suivantes :
- on imprime le masque sur un support ;
- on recouvre le support d'un film, au niveau et au voisinage du masque imprimé ;
- on sépare l'ensemble masque - film du support ;
- on applique l'ensemble masque - film sur la pièce ;
- on ôte le film, le masque restant solidarisé à la pièce.

Le masque peut recouvrir intégralement la pièce à décorer.

Il est également possible d'appliquer sur la pièce une substance initialement liquide, apte à former un masque après séchage.

Selon d'autres caractéristiques, on projette sur la pièce une matière abrasive en particules, telle que du sable ou du corindon, les particules pouvant présenter un diamètre compris entre 100 et 150 µm.

Par exemple, on projette la matière sur la pièce au moyen d'au moins une buse, et on déplace la pièce par rapport à la buse de sorte à projeter la matière sur l'ensemble de la surface souhaitée de la pièce.

Après la projection de la matière sur la pièce, ladite pièce est généralement nettoyée, le masque étant éliminé par lavage ou par brossage.

Grâce au procédé selon l'invention, les contours des reliefs en creux sont bien marqués et sensiblement dépourvus de congés de raccordement. De plus, l'impression du motif sur un support permet de réaliser un motif complexe et de supprimer une étape de découpe fastidieuse de la forme du motif dans le masque.

Les autres caractéristiques de l'invention résultent de la description qui suit de modes de réalisation, description effectuée en référence aux figures annexées dans lesquelles :
- la figure 1 est une vue de dessus d'un support sur lequel est imprimé un masque, ledit masque étant recouvert d'un film ;
- la figure 2 est une vue en section selon la ligne AA de la figure 1 ;
- les figures 3a à 3e représentent schématiquement les différentes étapes du procédé selon l'invention ;
- la figure 4 est une vue de dessus d'une assiette obtenue par le procédé selon l'invention, à partir du masque de la figure 1 ;
- la figure 5 est une vue en section partielle selon la ligne BB de la figure 4 ;
- les figures 6 et 7 illustrent deux modes de réalisation de projection de matière abrasive sur une pièce ;
- la figure 8a est une vue en plan d'un masque ;
- la figure 8b est une vue en section du masque de la figure 8a, selon la ligne CC, associé à une pièce soumise à un jet de matière abrasive ;
- la figure 8c est une vue en plan de la pièce de la figure 8b obtenue après projection.

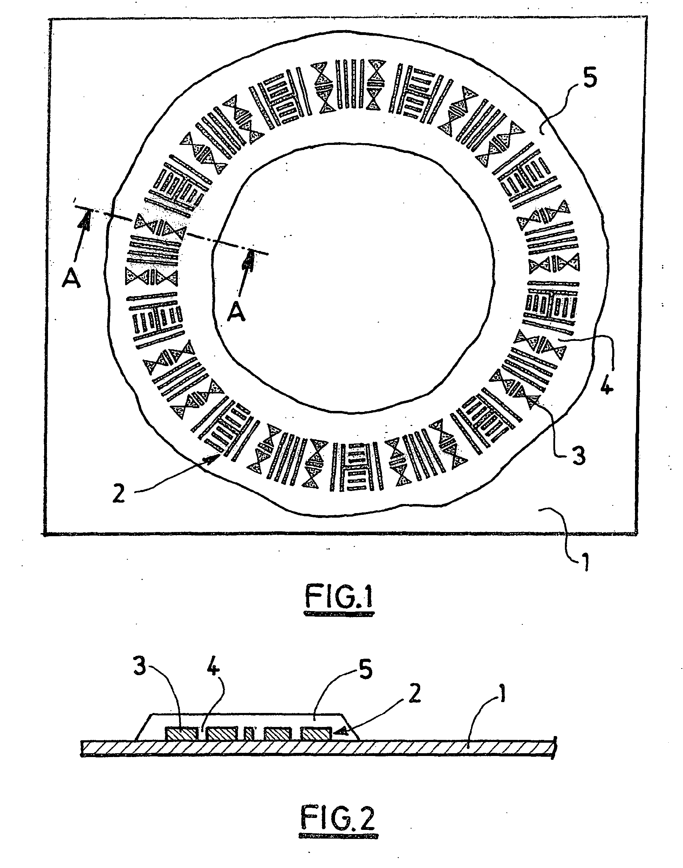

On se réfère tout d'abord aux figures 1 et 2.

Sur un support 1, tel qu'une feuille de papier gommée, est imprimé un masque 2 comportant des parties imprimées 3 - représentées en grisé - et des ouvertures 4 - représentées en blanc. Le masque 2 est par exemple imprimé par sérigraphie sur le support 1.

L'impression par sérigraphie du masque permet de réaliser des motifs fins et complexes, difficilement réalisable par découpe de la forme du motif dans un masque.

Le masque 2 est destiné à être appliqué sur une pièce en porcelaine ou en faïence, préalablement à la projection sur ladite pièce d'une matière abrasive, en vue de la réalisation sur ladite pièce de reliefs en creux.

Le masque 2 agit à la manière d'un pochoir. En effet, d'une part, les ouvertures 4 sont destinées à permettre le passage de la matière abrasive. D'autre part, les parties imprimées 3 sont réalisées en un matériau résistant au jet de matière abrasive, par exemple en un film de matière plastique. De ce fait, les parties imprimées 3 assurent la protection des parties de la pièce sur lesquelles elles sont appliquées.

Le masque 2 permet donc la formation de reliefs en creux dans la pièce sur laquelle il aura été appliqué.

Le masque 2 imprimé sur le support 1 est recouvert d'un film 5 de vernis, tant au niveau des parties imprimées 3 que des ouvertures 4. Le film 5 recouvre également une partie du support 1, au voisinage du masque 2.

Le masque 2 présente une forme étudiée pour être adapté à la pièce à laquelle il est destinée. Dans la réalisation représentée, l'ensemble masque 2 - film 5 est sensiblement annulaire, et est destinée à être appliqué sur l'aile d'une assiette.

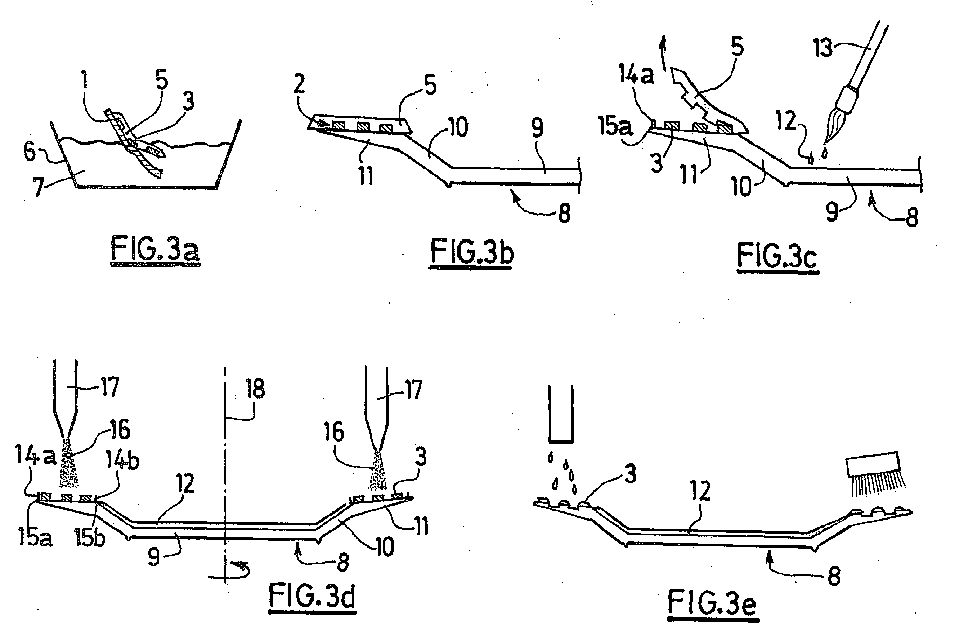

On décrit à présent les différentes étapes du procédé selon l'invention, permettant de réaliser des reliefs en creux sur une pièce en porcelaine ou en faïence, en référence aux figures 3a à 3e.

Tout d'abord, le support 1, le masque 2 et le film 5 sont mis à tremper dans un récipient 6 contenant un liquide 7, par exemple de l'eau, ce qui permet d'assouplir et de séparer l'ensemble masque 2 - film 5 du support 1 (figure 3a). Le film 5 forme alors un élément de support pour les parties imprimées 3 du masque 2.

L'ensemble masque 2 - film 5 est ensuite transféré sur une pièce 8 en porcelaine ou en faïence, en vue de la décoration de ladite pièce 8.

La pièce 8 représentée en section sur les figures est une assiette, et comprend un fond 9, sensiblement discoïdal et plan, une paroi oblique 10, sensiblement tronconique, s'étendant depuis la périphérie du fond 9 vers l'extérieur, ainsi qu'une aile 11 annulaire, sensiblement parallèle au fond 9, prolongeant la paroi oblique 10.

Bien entendu, l'invention n'est pas limitée aux assiettes présentant cette forme, et peut s'appliquer à toute pièce en porcelaine ou en faïence, notamment à toute pièce de service de table ou de décoration.

L'ensemble masque 2 - film 5 étant assoupli par le contact avec le liquide 7, il peut être appliqué manuellement sur la pièce 8 et épouser intimement les formes même complexes de toute pièce 8, de façon que le motif souhaité puisse être réalisé sur la pièce 8.

Dans la réalisation représentée, l'ensemble masque 2 - film 5 est sensiblement annulaire, et est appliqué sur l'aile 11 de l'assiette (figure 3b).

Une fois l'ensemble masque 2 - film 5 séché, le film 5 de vernis est ôté par pelliculage, par exemple par traction sur une languette prévue à cet effet, le masque 2 restant solidarisé à la pièce 8 (figure 3c).

Ainsi, il n'est pas nécessaire d'employer une colle pour solidariser le masque sur la pièce à décorer, ce qui simplifie les étapes du procédé et pose moins de problème lors du nettoyage de la pièce une fois les motifs réalisés.

Il est à noter que sur les figures 3a à 3e, le masque 2 est représenté agrandi par rapport à la pièce 8, afin de faciliter la compréhension.

Sur les parties supplémentaires de la pièce 8 devant être protégées peut être appliquée une substance 12 initialement liquide, par exemple le même vernis que celui composant le film 5.

Cette substance 12 est appliquée au moyen d'un pinceau 13, et est apte à former un masque après séchage (figure 3c).Par exemple, la substance 12 est appliquée sur le fond 9 de l'assiette, sur la paroi oblique 10, ainsi que sur un premier cercle 14a situé vers le bord extérieur 15a de l'aile 11 de l'assiette, et sur un deuxième cercle 14b situé vers le bord intérieur 15b de l'aile 11 de l'assiette.

L'application de la substance 12 au pinceau 13 est précise et permet ainsi d'effectuer des retouches si cela s'avère nécessaire suite à un positionnement incorrect du masque 2 sur la pièce 8.

Selon une variante possible au masquage par pinceau, un masque en résine peut être positionné sur la zone à protéger, par exemple le fond 9 et la paroi oblique 10 de l'assiette.

Une fois ces opérations de protection terminées, la pièce 8 est introduite dans une cabine de sablage, et l'on procède à la gravure proprement dite.

Sur la pièce 8 est projetée une matière abrasive 16 en particules, telle que du sable ou du corindon, présentant un diamètre compris entre 100 et 150 µm, notamment voisin de 120 µm.

La matière abrasive 16 est projetée via des buses 17 sous une pression comprise entre 3 et 3,5 ou 4 bars, la pièce 8 étant déplacée par rapport aux buses 17 de sorte à exposer l'ensemble de la surface souhaitée de la pièce 8 au jet de matière abrasive 16.

Dans le cas de l'assiette illustrée sur la figure 3d, deux buses 17 sont placées de sorte à être chacune en regard de l'aile 11, de façon diamétralement opposée. Chaque buse 17 couvre une surface d'environ 2 cm². L'assiette est mise en rotation autour de son axe 18, de sorte que l'ensemble de l'aile 11 soit soumise au jet de matière abrasive 16. La rotation de l'assiette est relativement lente, de l'ordre de 6 à 8 tours par minute, le temps de rotation étant de l'ordre de 5 à 10 minutes, par exemple 7 minutes.

Cette disposition des buses 17 peut bien entendu être modifiée, de même que le nombre de buses 17, en fonction de la forme de la pièce 8 et de la position souhaitée des décors sur ladite pièce 8.

Un contrôle précis de différents paramètres (pression d'air, débit, inclinaison des buses, hauteur des buses, type d'abrasif utilisé, granulométrie, etc.) est effectué, notamment en vue d'obtenir les effets esthétiques désirés.

Comme indiqué précédemment, les parties de la pièce 8 recouvertes par une partie imprimée 3 du masque 2 sont protégées de l'attaque de la matière abrasive 16, tandis que les parties de la pièce 8 situées en regard des ouvertures 4 du masque 2 sont entamées par la matière abrasive 16, ce qui conduit à la formation par gravure de reliefs en creux dans la pièce 8.

Après un temps déterminé, la pièce 8 est retirée de la cabine de sablage.

On procède alors au nettoyage de la pièce 8, comme illustré sur la figure 3e. Au cours de ce nettoyage, les parties imprimées 3 du masque 2, ainsi que l'éventuel masque supplémentaire en résine, peuvent être éliminés soit par lavage, soit par brossage.

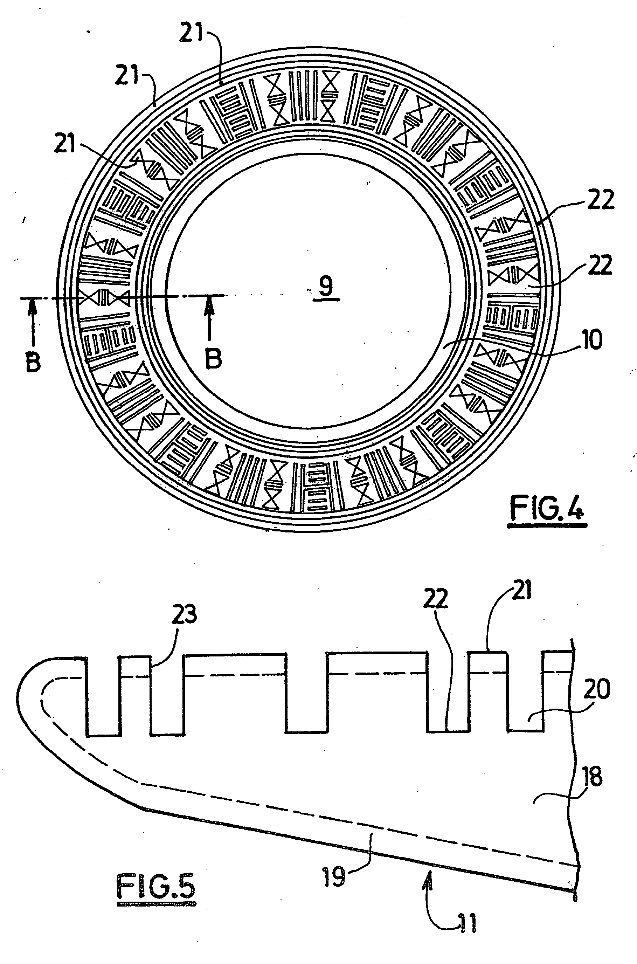

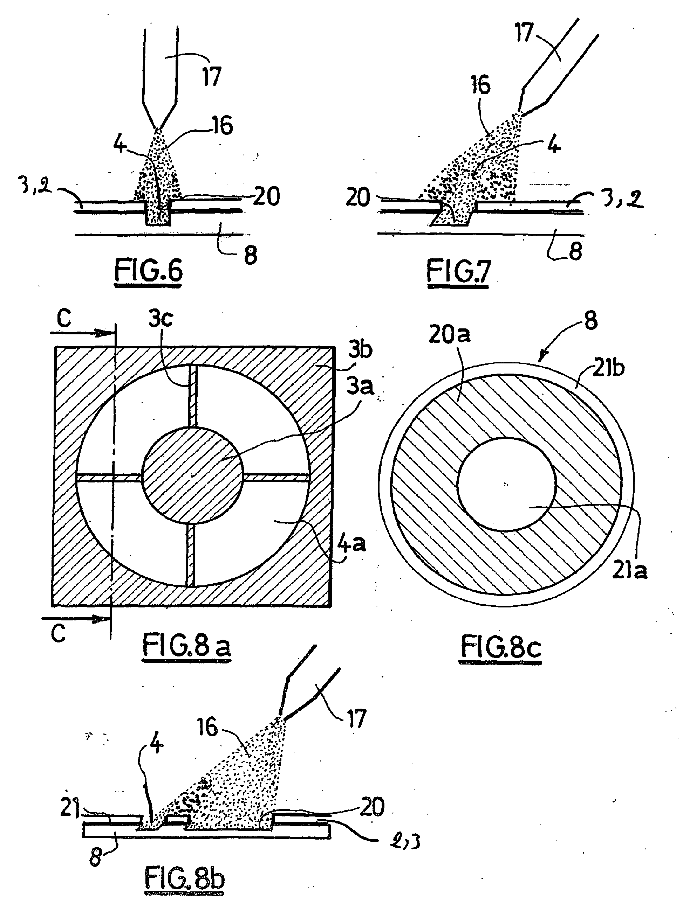

Un exemple de pièce 8 ainsi obtenue est représenté sur les figures 4 et 5.

Sur la figure 5, représentant l'aile 11 gravée de l'assiette en section, la ligne pointillée indique la limite entre la couche centrale de tesson 18 et la couche superficielle d'émail 19.

La pièce 8 présente des reliefs en creux 20 correspondant aux ouvertures 4 du masque 2, et des zones 21 non entamées car protégées pendant la projection de la matière abrasive 16 par les parties imprimées 3 du masque 2.

La profondeur des creux 20 est comprise entre 1 et 3 mm, et notamment entre 1,2 et 2 mm. De ce fait, et comme illustré sur la figure 5, la gravure a été effectuée au-delà de l'émail 19, entamant le tesson 18.

Le procédé selon l'invention permet donc d'obtenir des pièces présentant des reliefs en creux très profonds, sans que cela pose un quelconque problème technique ou esthétique.

Le fond 22 des creux 20 présente un aspect mat, tandis que les zones 21 non entamées par la matière abrasive 16 présentent l'aspect brillant de la porcelaine - ou de la faïence.

En outre, les arêtes 23 liant les creux 20 et les zones 21 non entamées sont sensiblement verticales. Ainsi, les contours des reliefs sont extrêmement précis, nets et tranchés, les arêtes 23 étant sensiblement dépourvues de congés de raccordement, comme illustré sur la figure 5. Ainsi, les creux 20 sont parfaitement visibles, et les zones 21 non entamées se détachent nettement en saillie des creux 20. Il est donc possible de réaliser des décors plus marqués, plus profonds que les décors traditionnels.

Du fait de son esthétique nouvelle, sobre et originale, la pièce ainsi obtenue peut ne comporter aucun autre décor que la gravure elle-même.

Le procédé selon l'invention ne comporte qu'une étape effectuée manuellement, à savoir le transfert du masque 2 sur la pièce 8 à décorer, les autres opérations étant effectuées de manière automatisée. Il s'ensuit un gain de temps et une économie substantielle.

Les figures 6 à 7 illustrent d'autres modes de réalisation de l'invention.

Le masque 2, comprenant des parties pleines 3 et au moins une ouverture 4, est placé sur la pièce 8. La buse 17 projette sur le masque 2 en regard de la pièce 8, au moins au niveau des ouvertures, la matière abrasive 16.

Sur la figure 6, le jet de matière abrasive 16 est orienté sensiblement perpendiculairement à la pièce 8. De ce fait, les reliefs en creux 20 formés sur la pièce 8 présentent une forme correspondant à la forme des ouvertures 4.

Sur la figure 7, le jet de matière abrasive 16 est incliné d'un angle inférieur à 90° par rapport à la pièce 8. Ainsi, la forme du relief en creux 20 obtenu n'est pas identique à la forme de l'ouverture 4 correspondante du masque 2.

La figure 8a représente un masque 2 comprenant :
- une partie centrale 3a, pleine et discoïdale ;
- autour de la partie centrale 3a, une ouverture 4a en forme de couronne ;
- autour de l'ouverture 4a, une partie périphérique 3b pleine, possédant par exemple un contour rectangulaire ;
- des rayons 3c pleins, très fins, permettant de rattacher la partie centrale 3a à la partie périphérique 3b.

Par projection de façon inclinée de matière abrasive 16 sur la pièce 8, le masque étant interposé entre la pièce 8 et la buse 17, on obtient des creux 20 ne correspondant pas à la forme des ouvertures 4 du masque (figure 8b).

Une seconde projection de matière abrasive 16, de façon symétrique par rapport à un plan P perpendiculaire à la pièce 8, on obtient la pièce 8 illustrée sur la figure 8c.

Du fait de la projection de matière abrasive 16 de façon inclinée, les rayons pleins 3c n'ont pas protégé la surface en regard de la pièce 8. Ainsi, le support présente :
- une partie centrale 21a non entamée, car protégée par la partie centrale 3a pleine du masque 2 ;
- une couronne en creux 20a (hachurée) ne comportant pas de rayons non entamés ;
- une partie périphérique 21b non entamée, car protégée par la partie périphérique 3b du masque 2.

De façon générale, les ouvertures 4 du masque 2 et l'orientation de la buse 17 sont choisies de façon à obtenir sur la pièce 8 des reliefs en creux 20 de la forme désirée.

## Revendications

1. Procédé de réalisation de reliefs en creux (20) sur une pièce (8) en porcelaine ou en faïence, dans lequel :
- on prévoit un masque (2) comportant d'une part des parties pleines (3), aptes à résister à un jet de matière abrasive, et d'autre part des ouvertures (4), destinées à permettre le passage de la dite matière abrasive ;
- on place le masque (2) devant la pièce (8) ;
- on projette sur le masque (2), au moins en regard des ouvertures (4), une matière (16) apte à entamer la porcelaine ou la faïence, de façon à obtenir un ou plusieurs creux (20) de la forme et de la profondeur voulues ;
**caractérisé en ce qu**'il comprend les étapes suivantes :
- on imprime le masque (2) sur un support (1) ;
- on recouvre le support (1) d'un film (5), au niveau et au voisinage du masque imprimé (2) ;
- on sépare l'ensemble masque (2) - film (5) du support (1) ;
- on applique l'ensemble masque (2) - film (5) sur la pièce (8) ;
- on ôte le film (5), le masque (2) restant solidarisé à la pièce (8).

2. Procédé selon la revendication 1, **caractérisé en ce que** le masque (2) est imprimé par sérigraphie sur le support (1).

3. Procédé selon la revendication 1 ou 2, **caractérisé en ce qu**'on applique sur la pièce (8) une substance (12) initialement liquide, apte à former un masque (2) après séchage.

4. Procédé selon l'une quelconque des revendications 1 à 3, **caractérisé en ce que** le masque (2) recouvre la totalité de la pièce (8).

5. Procédé selon l'une quelconque des revendications 1 à 4, **caractérisé en ce qu'**on projette sur la pièce (8) une matière abrasive (16) en particules.

6. Procédé selon l'une quelconque des revendications 1 à 5, **caractérisé en ce qu**'on projette sur la pièce (8) du sable ou du corindon.

7. Procédé selon l'une quelconque des revendications 1 à 6, **caractérisé en ce que** la matière projetée (16) se présente sous la forme de particules d'un diamètre compris entre 100 et 150 µm.

8. Procédé selon l'une quelconque des revendications 1 à 7, **caractérisé en ce que** la matière (16) est projetée sous une pression de l'ordre de 3 à 4 bars.

9. Procédé selon l'une quelconque des revendications 1 à 8, **caractérisé en ce qu**'on projette la matière (16) sur la pièce (8) au moyen d'au moins une buse (17) et en ce qu'on déplace la pièce (8) par rapport à la buse (17) de sorte à projeter la matière (16) sur l'ensemble de la surface souhaitée de la pièce (8).

10. Procédé selon l'une quelconque des revendications 1 à 9, **caractérisé en ce que,** après la projection de la matière (16) sur la pièce (8), ladite pièce (8) est nettoyée, le masque (2) étant éliminé par lavage ou par brossage.

## Claims

1. Method of making hollow raised patterns (20) on a piece (8) of porcelain or earthenware, wherein :
- a mask (2) is provided comprising, on the one hand, full parts (3) capable of resisting a jet of abrasive material and, on the other hand, openings (4) designed to allow said abrasive material through;
- the mask (2) is placed in front of the piece (8);
- a material (16) capable of cutting into the porcelain or earthenware is projected onto the mask (2) at least opposite the openings (4) so as to obtain one or several hollow sections (20) with the desired shape and depth;
**characterised in that** it comprises the following steps:
- the mask (2) is printed on a medium (1);
- the medium (1) is covered with a film (5) level with and in the proximity of the printed mask (2);
- the mask (2) - film (5) assembly is separated from the medium;
- the mask (2) - film (5) assembly is applied to the piece;
- the film (5) is removed, the mask (2) remaining solidly attached to the piece (8).

2. Method according to claim 1, **characterised in that** the mask (2) is printed by silkscreen printing on the medium (1) .

3. Method according to claim 1 or 2, **characterised in that** an initially liquid substance (12), which is capable of forming a mask (2) after drying, is applied to the piece (8) .

4. Method according to any one of the claims from 1 to 3, **characterised in that** the mask (2) covers the whole of the piece (8).

5. Method according to any one of the claims from 1 to 4, **characterised in that** an abrasive material (16) in particles is projected onto the piece (8).

6. Method according to any one of the claims from 1 to 5, **characterised in that** sand or corundum is projected onto the piece (8).

7. Method according to any one of the claims from 1 to 6, **characterised in that** the projected material (16) is presented in the form of particles with a diameter comprised between 100 and 150 □m.

8. Method according to any one of the claims from 1 to 7, **characterised in that** the material (16) is projected under a pressure of around 3 to 4 bars.

9. Method according to any one of the claims from 1 to 8, **characterised in that** the material (16) is projected onto the piece (8) by means of at least one nozzle (17) and **in that** the piece (8) is moved in relation to the nozzle (17) so as to project the material (16) onto all the desired surface of the piece (8).

10. Method according to any one of the claims from 1 to 9, **characterised in that**, after projecting the material (16) onto the piece (8), said piece (8) is cleaned, the mask (2) being removed by washing or scrubbing.

## Patentansprüche

1. Verfahren zum Ausführen von Hohlreliefs (20) auf einem Teil (8) aus Porzellan oder aus Fayence, bei dem:
- Eine Maske (2) vorgesehen ist, die einerseits massive Partien (3) umfaßt, die geeignet sind, einem Strahl mit Scheuermaterial zu widerstehen, und andererseits Öffnungen (4), die dazu bestimmt sind, den Durchgang des besagten Scheuermaterials zuzulassen;
- Die Maske (2) wird vor das Teil (8) plaziert;
- Auf die Maske (2) wird zumindest vor den Öffnungen (4) ein Material (16) gestrahlt, das geeignet ist, das Porzellan oder die Fayence so anzugreifen, daß eine oder mehrere Hohlstellen (20) in gewünschter Form und Tiefe erzielt werden;
**Dadurch gekennzeichnet, daß** es die folgenden Schritte umfaßt:
- Die Maske (2) wird auf einen Träger (1) gedruckt;
- Der Träger (1) wird auf und in der Nähe der gedruckten Maske (2) mit einer Folie (5) abgedeckt;
- Das Ensemble Maske (2) - Folie (5) wird vom Träger (1) getrennt;
- Das Ensemble Maske (2) - Folie (5) wird auf das Teil (8) aufgebracht;
- Die Folie (5) wird entfernt, wobei die Maske (2) fest mit dem Teil (8) verbunden zurückbleibt.

2. Verfahren nach Anspruch 1, **dadurch gekennzeichnet, daß** die Maske (2) durch Siebdruck auf den Träger (1) gedruckt wird.

3. Verfahren nach Anspruch 1 oder 2, **dadurch gekennzeichnet, daß** auf das Teil (8) eine Substanz (12) aufgebracht wird, die ursprünglich flüssig und geeignet ist, nach dem Trocknen eine Maske (2) zu bilden.

4. Verfahren nach einem beliebigen der vorstehenden Ansprüche 1 bis 3, **dadurch gekennzeichnet, daß** die Maske (2) das gesamte Teil (8) abdeckt.

5. Verfahren nach einem beliebigen der vorstehenden Ansprüche 1 bis 4, **dadurch gekennzeichnet, daß** auf das Teil (8) ein Scheuermaterial (16) in Partikelform aufgestrahlt wird.

6. Verfahren nach einem beliebigen der vorstehenden Ansprüche 1 bis 5, **dadurch gekennzeichnet, daß** auf das Teil (8) Sand oder Korund gestrahlt wird.

7. Verfahren nach einem beliebigen der vorstehenden Ansprüche 1 bis 6, **dadurch gekennzeichnet, daß** das gestrahlte Material (15) die Form von Partikeln mit einem Durchmesser zwischen 100 und 150 µm aufweist.

8. Verfahren nach einem beliebigen der vorstehenden Ansprüche 1 bis 7, **dadurch gekennzeichnet, daß** das Material (16) unter einem Druck von 3 bis 4 Bar aufgestrahlt wird.

9. Verfahren nach einem beliebigen der vorstehenden Ansprüche 1 bis 8, **dadurch gekennzeichnet, daß** das Material (16) mit zumindest einer Düse (17) auf das Teil (8) aufgestrahlt wird, und daß das Teil (8) gegenüber der Düse (17) so bewegt wird, daß das Material (16) auf die gesamte gewünschte Fläche des Teils (8) aufgestrahlt wird.

10. Verfahren nach einem beliebigen der vorstehenden Ansprüche 1 bis 9, **dadurch gekennzeichnet, daß** nach dem Aufstrahlen des Materials (16) auf das Teil (8) das besagte Teil (8) gereinigt wird, wobei die Maske (2) durch Spülen oder Bürsten entfernt wird.
